Europäisches Patentamt

European Patent Office

Office européen des brevets

(11) Veröffentlichungsnummer: **0 154 944**
**A2**

(12) **EUROPÄISCHE PATENTANMELDUNG**

(21) Anmeldenummer: **85102616.1**

(22) Anmeldetag: **07.03.85**

(51) Int. Cl.⁴: **F 16 K 31/122**

(30) Priorität: **07.03.84 BG 64559/84**

(43) Veröffentlichungstag der Anmeldung: **18.09.85**
Patentblatt 85/38

(84) Benannte Vertragsstaaten: **AT DE FR GB IT NL**

(71) Anmelder: **INSTITUT PO MECHANIKA I BIOMECHANIKA,**
**Akademik Bontchev Str., Block 8, Sofia 1113 (BG)**

(72) Erfinder: **Georgiev, Vesselin Yordanov, Quartal**
**Darvenitza, 27 Paprat Str., Sofia (BG)**
Erfinder: **Mednikarov, Vladimir Stefanov, 15, Venelin Str.,**
**Sofia (BG)**

(74) Vertreter: **Finck, Dieter et al, Patentanwälte v. Füner,**
**Ebbinghaus, Finck Mariahilfplatz 2 & 3,**
**D-8000 München 90 (DE)**

(54) **Schieberabsperrhahn.**

(57) Für die mehrstellige Wasserabgabe in verzweigten Rohrleitungssystemen, insbesondere für Berieselungszwecke, wird ein Schieberabsperrhahn verwendet, der zuverlässig auf hydraulische Steuersignale unabhängig von deren Bildungsgeschwindigkeit anspricht und bei welchem keine Drosselöffnungen vorhanden sind, die sich zusetzen können, so dass eine Reinigung des für die Berieselung verwendeten Wassers entfällt. Der Schieberabsperrhahn hat dafür einen auf einer Rohrleitungsabzweigung (1) montierten Schieber (2), einen Kolben (4) aufweisenden Zylinder (3), dem auf einer Seite eine Programmvorrichtung (5) zugeordnet ist und der an einem Behälter (9) für Wasser und Luft angeschlossen ist. In einem zur Rohrleitungsabzweigung (1) hin verlängerten Teil (11) des Zylinders (3) sind über der Länge des Schiebers (2) auf der Seite der Einlassöffnung (10) der Rohrleitungsabzweigung (1) Längskanäle (12) ausgeführt. Der Schieber (2) hat einen Hohlraum (13), in dem ein Kopf (14) frei angeordnet ist, der über eine Stange (15) mit dem im Zylinder (3) geführten Kolben (4) verbunden ist. Der Hohlraum (13) ist über eine Öffnung (31) auf der einen Seite, der Zylinder (3) über eine erste axiale Öffnung (16) im schieberseitigen Boden mit einer Zwischenschieberkammer (17) verbunden. Rings um die Oberfläche des Zylinders (3) sind vier Reihen von Öffnungen (18, 19, 20, 21) vorgesehen, von denen die schieberseitigen zwei Reihen von Öffnungen (18, 19) von einer ersten ringförmigen Aussenkammer (22) umschlossen sind, während die programmvorrichtungsseitigen zwei Reihen von Öffnungen (20, 21) von einer zweiten ringförmigen Aussenkammer (23) umgeben sind, die ihrerseits über eine Öffnung (24) mit dem Behälter (9) für Wasser und Luft verbunden ist. Die zweite Reihe von Öffnungen (19) und die dritte Reihe von Öffnungen (20) sind aussen mit elastischen Ringen (25, 26) bedeckt. Im programmvorrichtungsseitigen Boden des Zylinders (3) ist eine zweite axiale Öffnung (27) ausgebildet, durch welche eine mit ihrem einen Ende mit dem Kolben (4) fest verbundene Stange (28) hindurchgeht, an deren anderem Ende quer zur ihr ein frei um sie drehbarer Dorn (28) angebracht ist, dessen äusseres Ende in kurze und lange Programmkanäle (6, 7) der Programmvorrichtung (5) eingreift.

. FÜNER     E B B I N G H A U S     F I N C K

PATENTANWÄLTE     EUROPEAN PATENT ATTORNEYS

MARIAHILFPLATZ 2 & 3, MÜNCHEN 90
POSTADRESSE: POSTFACH 95 01 60, D-8000 MÜNCHEN 95

0154944

INSTITUT PO MECHANIKA I BIOMECHANIKA     EPAC-32610.3

7. März 1985

Schieberabsperrhahn

Die Erfindung betrifft einen Schieberabsperrhahn mit einem auf einer Rohrleitungsabzweigung montierten Schieber, mit einem einen Kolben aufweisenden Zylinder, dem auf der einen Seite eine Programmvorrichtung zugeordnet ist und der mit einem Behälter für Wasser und Luft verbunden ist.

Zum Stand der Technik gehört ein Schieberabsperrhahn, welcher ein Gehäuse mit einem an einer Rohrleitungsabzweigung angebrachten Schieber aufweist. Der Schieber sitzt an einer Stange, die mit der einen Stirnseite eines Kolbens verbunden ist, der in einer Kammer eines Zylinders geführt ist. Der anderen Stirnseite des Kolbens ist eine Programmvorrichtung zugeordnet. Der Raum unterhalb des Kolbens im Zylinder ist über eine Rohrleitung mit dem Wasseraustritt zwischen einer verteilenden Rohrleitung und dem Schieber verbunden. Der über dem Kolben befindliche Raum ist über eine axiale Bohrung am Boden des Zylinders mit einem Behälter für Wasser und Luft verbunden. Dieser Behälter ist an der Außenseite des Zylinders konzentrisch dazu befestigt und steht über eine Bohrung in seinem niedrigsten Punkt und eine Verbindungsleitung mit dem Wasseraustritt in Verbindung.

Der bekannte Schieberabsperrhahn verarbeitet hydraulische Steuersignale, wenn diese beispielsweise bei langen Rohrleitungsnetzen langsam gebildet werden, nicht zuverlässig, was zu einer Druckabsenkung oder Drucksteigerung in dem Behälter für Wasser und Luft führen kann, ohne daß dabei der Kolben betätigt wird. Außerdem sind Drosselbohrungen mit kleinem Durchmesser erforderlich, was eine vorherige Reinigung des für Berieselungszwecke vorgesehenen Wassers erfordert, um das Zusetzen dieser Bohrungen durch im Wasser befindliche Teilchen zu verhindern.

Die der Erfindung zugrunde liegende Aufgabe besteht nun darin, den Schieberabsperrhahn der eingangs genannten Art so auszubilden, daß ein zuverlässiges Verarbeiten von hydraulischen Steuersignalen bzw. ein zuverlässsiges Ansprechen auf solche Signale unabhängig von deren Bildungsgeschwindigkeit gewährleistet ist, wobei gleichzeitig eine Reinigung des für Berieselungszwecke verwendeten Wassers von mechanischen Beimischungen entfallen kann.

Diese Aufgabe wird ausgehend von dem Schieberabsperrhahn der eingangs genannten Art dadurch gelöst, daß in einem zur Rohrleitungsabzweigung hin verlängerten Teil des Zylinders über der Länge des Schiebers auf der Seite der Einlaßöffnung der Rohrleitungsabzweigung Längskanäle ausgeführt sind, daß der Körper des Schiebers einen Hohlraum aufweist, in dem ein Kopf frei angeordnet ist, der über eine Stange mit dem im Zylinder geführten Kolben verbunden ist, daß der Hohlraum über eine Öffnung auf der einen Seite und der Zylinder über eine erste axiale Öffnung im schieberseitigen Boden mit einer Zwischenschieberkammer verbunden sind, daß rings um die Oberfläche des Zylinders vier Reihen von Öffnungen vorgesehen sind, von denen die schieberseitigen zwei Reihen von Öffnungen von einer ersten ringförmigen Außenkammer

0154944

umschlossen sind, während die programmvorrichtungsseitigen zwei Reihen von Öffnungen von einer zweiten
ringförmigen Außenkammer umgeben sind, die ihrerseits
über eine Öffnung mit dem Behälter für Luft und Wasser
verbunden ist, daß die zweite Reihe von Öffnungen und
die dritte Reihe von Öffnungen außen mit elastischen
Ringen bedeckt sind, daß im programmvorrichtungsseitigen Boden eine zweite axiale Öffnung ausgebildet
ist, durch welche eine mit ihrem einen Ende mit dem
Kolben fest verbundene Stange hindurchgeht, an deren
anderen Ende quer zu ihr ein frei um sie drehbarer
Dorn angebracht ist, dessen äußeres Ende in kurze und
lange Programmkanäle der Programmvorrichtung eingreift.

Die erste und vierte Reihe von Öffnungen des Zylinders
sind immer mit dem unter dem Kolben befindlichen
Raum bzw. mit dem über dem Kolben befindlichen Raum
des Zylinders verbunden.

Die Länge der kurzen Programmkanäle der Programmvorrichtung ist gleich der Entfernung zwischen den Achsen
der ersten und dritten Reihe von Öffnungen des Zylinders
und der Länge des freien Hubs des Kopfes in dem Hohlraum
des Schiebers, während die Länge der langen Programmkanäle gleich ist der Summe der Länge des Hubs des
Kolbens im Zylinder, des Hubs des Kopfs im Hohlraum des
Schiebers und des Hubs des Schiebers in der Schieberkammer.

Dabei ist die Entfernung zwischen den ersten zwei Reihen
von Öffnungen des Zylinders größer als die Länge des
Kolbens.

Mit dem erfindungsgemäßen Schieberabsperrhahn läßt sich
eine äußerst zuverlässige Verarbeitung der hydraulischen
Steuersignale unabhängig von deren Bildungsgeschwindigkeit bzw. ein zuverlässiges Ansprechen auf solche Steuersignale erreichen, weil der Kolben, bevor eine Verdichtung der Luft im Luftraum oder eine Abdichtung des Luftraums in dem Behälter für Wasser und Luft stattfindet, mit Sicherheit verschoben wird. Außerdem fehlen Drosselöffnungen mit kleinem Durchmesser, so daß es nicht notwendig ist, das Wasser, das für die Berieselung verwendet werden soll, von teilchenförmigen Beimischungen vorher zu reinigen.

Anhand einer Zeichnung, in der der Schieberabsperrhahn im Axialschnitt dargestellt ist, wird die Erfindung näher erläutert.

Der Schieberabsperrhahn hat einen an einer Rohrleitungsabzweigung 1 montierten Schieber 2, einen Zylinder 3 mit einem Kolben 4, welcher auf einer Seite mit dem Schieber 2 und auf der anderen Seite mit einer Programmvorrichtung 5 verbunden ist, die kurze Programmkanäle 6 und lange Programmkanäle 7 aufweist, denen ein Dorn 8 für den Eingriff zugeordnet ist, sowie einen Behälter 9 für Wasser und Luft.

In einem schieberseitigen verlängerten Teil 11 des Zylinders 3 sind sich längs des Schiebers 2 auf der Seite einer Eintrittsöffnung 11 in die Rohrleitungsabzweigung 1 erstreckende Längskanäle 12 ausgebildet. Der Schieber 2 hat einen Hohlraum 13, in dem ein Kopf 12 frei sitzt, der über eine Stange 15 mit dem Kolben 4 verbunden ist. Der Hohlraum 13 steht über eine Öffnung 31, durch die sich die Stange 15 erstreckt, mit einer Zwischenschieberkammer 17 in Verbindung, mit der auch der Zylinder 3 über eine erste axiale Öffnung 16 verbunden ist. Rings um die Oberfläche des Zylinders 3 sind vier Reihen von Öffnungen 18, 19, 20 und 21 vorgesehen. Die schieberseitigen zwei Reihen von Öffnungen 18 und 19 sind von einer ersten ringförmigen Außenkammer 22 umschlossen. Die programmvorrichtungsseitigen zwei Reihen von Öffnungen 20 und 21 sind von einer zweiten ringförmigen Außenkammer 23 umgeben, die ihrerseits über eine senkrechte

0154944

Öffnung 24 mit dem Behälter 9 für Wasser und Luft verbunden ist. Die zweite Reihe von Öffnungen 19 und die dritte Reihe von Öffnungen 20 sind außen von entsprechenden elastischen Ringen 25 und 26 bedeckt. Im programmvorrichtungsseitigen Boden des Zylinders 3 ist eine zweite axiale Öffnung 27 ausgebildet, durch die sich eine mit dem Kolben 4 fest verbundene Stange 28 erstreckt, an deren anderem Ende quer zur ihr ein frei um sie drehbarer Dorn 8 angebracht ist. Die erste Reihe von Öffnungen 18 und die vierte Reihe von Öffnungen 21 des Zylinders 3 sind immer jeweils mit dem unter dem Kolben 4 befindlichen Raum 29 bzw. mit dem über dem Kolben 4 befindlichen Raum 30 des Zylinders 3 unabhängig von der Lage des Kolbens 4 verbunden.

Die Länge der kurzen Programmkanäle 6 ist gleich der Entfernung zwischen den Achsen der ersten Reihe von Öffnungen 18 und der dritten Reihe von Öffnungen 20 des Zylinders 3 und der Länge des freien Hubs des Kopfes 14 in dem Hohlraum 13 des Schiebers 2. Die Länge der langen Programmkanäle 7 ist gleich der Summe der Länge des Hubs des Kolbens 4 im Zylinder 3, des Hubs des Kopfes 14 im Hohlraum 13 des Schiebers 2 und des Hubs des Schiebers 2 in der Schieberkammer 17. Die Entfernung zwischen den ersten zwei Reihen von Öffnungen 18 und 19 des Zylinders 3 ist größer als die Länge des Kolbens 4.

Der Schieberabsperrhahn arbeitet folgendermaßen:

Bei einem Signal für erhöhten Wasserdruck in der Rohrleitungsabzweigung 1 dringt Wasser durch die Längskanäle 12 des Schiebers 2 in die Zwischenschieberkammer 17 ein und gelangt von dort über die erste axiale Öffnung 16 in den unter dem Kolben 4 befindlichen Raum 29 des Zylinders 3. Der Kolben 4 wird durch die Erhöhung des Wasserdrucks verschoben und mit ihm auch die Stangen 15 und 28, was auch eine Verschiebung des Kopfes 14 und des Dorns 8 bedeutet. Wenn sich der Dorn 8 in dem kurzen Programmkanal 6 befindet, wird die Bewegung des Kolbens 4 nach dem Passieren der dritten Reihe von Öffnungen 20 und kurz bevor der Kopf 14 das Ende des Hohlraums 13 im Schieber 2 erreicht hat, eingestellt.

Das den elastischen Ring 26 dehnende Wasser strömt durch die dritte Reihe von Öffnungen 20 in die zweite ringförmige Außenkammern 23 und von dort in den Behälter 9 für Wasser und Luft. Der Wasserstrom wird unterbrochen, wenn sich der Druck der im Behälter 9 für Wasser und Luft verdichteten Luft dem Wasserdruck in der Rohrleitungsabzweigung 1 angleicht.

Bei einem Signal für gesenkten Wasserdruck in der Rohrleitungsabzweigung 1 bzw. in dem unter dem Kolben 4 befindlichen Raum 29 des Zylinders 3 kehrt der Kolben 4 in seine ursprüngliche Stellung unter Einwirkung der sich im Behälter 9 für Wasser und Luft ausdehnenden Luft zurück, deren Druck in den über dem Kolben befindlichen Raum 30 über die vierte Reihe von Öffnungen 21 übertragen wird. Das im Behälter 9 für Wasser und Luft gespeicherte Wasser wird durch den über dem Kolben 4 befindlichen Raum 30, die zweite Reihe von Öffnungen 19, die erste ringförmige Außenkammer 22, die erste Reihe von Öffnungen 18 in den unter dem Kolben 4 befindlichen Raum 29 geführt und gelangt über die erste axiale Öffnung 16 in die Zwischenschieberkammer 17 und über die Längskanäle 12 zurück in die Rohrleitungsabzweigung 1.

Bei jedem darauffolgenden Signal für höheren oder niedrigeren Druck laufen dieselben Vorgänge ab, wobei nur die Bewegung des Dorns 8 dem Umriß des jeweiligen Programmkanals folgt. Wenn der Dorn 8 in einen langen Programmkanal 7 gelangt, läuft der Kolben 4 bis zum Ende des Zylinders 3, wobei er mit der Stange 15 und dem Kopf 14

0154944

den Schieber 2 herauszieht, wodurch der Strömungsweg für das Wasser durch die Rohrleitungsabzweigung 1 freigemacht wird. Beim nächsten Signal für niedrigeren Druck kehrt der Kolben 4 in seine Ausgangsstellung zurück, wobei der Schieber 2 die Rohrleitungsabzweigung 1 schließt. In Abhängigkeit von der Anzahl der langen Programmkanäle 7 und der kurzen Programmkanäle 6 läßt sich ein Zyklusablauf für das Öffnen der Rohrleitungsabzweigung 1 und für den Durchstrom des Wassers durch sie festlegen.

0154944

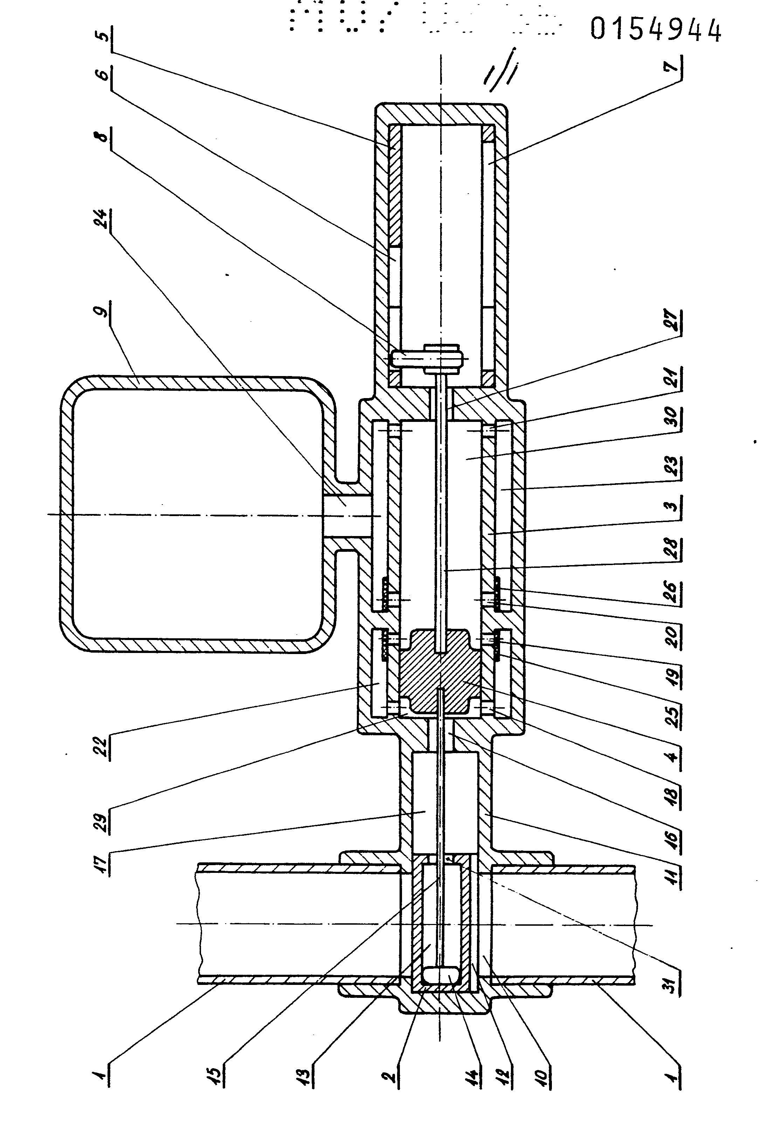

## Patentansprüche

1. Schieberabsperrhahn mit einem auf einer Rohrleitungsabzweigung (1) montierten Schieber (2) und mit einem einen
Kolben (3) aufweisenden Zylinder (4), dem auf der
einen Seite eine Programmvorrichtung (5) zugeordnet
ist und der mit einem Behälter (9) für Wasser und Luft
verbunden ist, dadurch  g e k e n n z e i c h n e t,
daß in einem zur Rohrleitungsabzweigung (1) hin verlängerten Teil (11) des Zylinders (3) über der Länge
des Schiebers (2) auf der Seite einer Einlaßöffnung
(10) der Rohrleitungsabzweigung (1) Längskanäle (12)
ausgeführt sind, daß der Körper des Schiebers (2) einen
Hohlraum (13) aufweist, in dem ein Kopf (14) frei angeordnet ist, der über eine Stange (15) mit dem im Zylinder
(3) geführten Kolben (4) verbunden ist, daß der Hohlraum (13) über eine Öffnung (31) auf der einen Seite
und der Zylinder (3) über eine erste axiale Öffnung
(16) im schieberseitigen Boden mit einer Zwischenschieberkammer (17) verbunden sind, daß rings um die
Oberfläche des Zylinders (3) vier Reihen von Öffnungen
(18, 19, 20, 21) vorgesehen sind, von denen die
schieberseitigen zwei Reihen von Öffnungen (18,19)
von einer ersten ringförmigen Außenkammer (22) umschlossen sind, während die programmvorrichtungsseitigen zwei Reihen von Öffnungen (20, 21) von einer
zweiten ringförmigen Außenkammer (23) umgeben sind,
die ihrerseits über eine Öffnung (24) mit dem Behälter
(9) für Wasser und Luft verbunden ist, daß die zweite
Reihe von Öffnungen (19) und die dritte Reihe von
Öffnungen (20) außen mit elastischen Ringen (25, 26)
bedeckt sind, daß im programmvorrichtungsseitigen Boden
des Zylinders eine zweite axiale Öffnung (27) ausgebildet ist, durch welche eine mit ihrem einen Ende mit
dem Kolben (4) fest verbundene Stange (28) hindurchgeht,
an deren anderem Ende quer zu ihr ein frei um sie drehbarer Dorn (28) angebracht ist, dessen äußeres Ende

0154944

in kurze und lange Programmkanäle (6, 7) der Programmvorrichtung (5) eingreift.

2. Schieberabsperrhahn nach Anspruch 1, dadurch g e -
k e n n z e i c h n e t,  daß die erste und vierte
Reihe von Öffnungen (18, 21) des Zylinders (3) immer
mit dem unter dem Kolben (4) befindlichen Raum (29)
bzw. mit dem über dem Kolben (4) befindlichen Raum (30)
des Zylinders (3) verbunden sind.

3. Schieberabsperrhahn nach Anspruch 1 oder 2, dadurch
g e k e n n z e i c h n e t,  daß die Länge der kurzen
Programmkanäle (6) der Programmvorrichtung (5) gleich
ist der Entfernung zwischen den Achsen der ersten und
dritten Reihe von Öffnungen (18, 20) des Zylinders (3)
und der Länge des freien Hubs des Kopfes (14) in dem
Hohlraum (13) des Schiebers (2) und daß die Länge
der langen Programmkanäle (7) gleich ist der Summe
der Länge des Hubs des Kolbens (4) im Zylinder (3),
des Hubs des Kopfs (14) im Hohlraum (13) des Schiebers
(2) und des Hubs des Schiebers (2) in der Schieberkammer (17).

4. Schieberabsperrhahn nach Anspruch 1 oder 2, dadurch
g e k e n n z e i c h n e t,  daß die Entfernung
zwischen den ersten zwei Reihen von Öffnungen (18, 19)
des Zylinders (3) größer ist als die Länge des
Kolbens (4).

EPAC-32610.3

0154944